(19) Europäisches Patentamt
European Patent Office
Office européen des brevets

(11) EP 1 170 256 A2

(12) **EUROPÄISCHE PATENTANMELDUNG**

(43) Veröffentlichungstag:
**09.01.2002 Patentblatt 2002/02**

(51) Int Cl.⁷: **C01D 7/38**, C11D 3/10, C11D 17/06

(21) Anmeldenummer: **01115351.7**

(22) Anmeldetag: **26.06.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **05.07.2000 DE 10032127**

(71) Anmelder: **Henkel Kommanditgesellschaft auf Aktien
40589 Düsseldorf-Holthausen (DE)**

(72) Erfinder:
- **Hammelstein, Stefan
40591 Düsseldorf (DE)**
- **Gonzàlez Artiga, René-Andres, Dr.
40589 Düsseldorf (DE)**
- **Pegelow, Ulrich, Dr.
40597 Düsseldorf (DE)**
- **Dreja, Michael, Dr.
50931 Köln (DE)**

(54) **Mechanisch stabile Soda-Partikel**

(57) Mit frischer, sehr trockener Soda kann man in einfacher Art und Weise hoch sodahaltige Partikel mit verbesserter Kornstabilität herstellen, wenn man vor der Herstellung der Partikel einen geringen Teil dieser Soda gegen eine Stabilisator austauscht. Bei diesem Stabilisator handelt es sich um Alkalimetallhydrogencarbonat und/oder Alkalimetallsesquicarbonat und/oder Alkalimetallaluminosilicat, bevorzugt um Natriumhydrogencarbonat und/oder Natriumsesquicarbonat und/oder Zeolith A, besonders bevorzugt um Natriumhydrogencarbonat.

EP 1 170 256 A2

## Beschreibung

Die vorliegendende Erfindung betrifft mechanisch stabile Partikel, die überwiegend aus Soda bestehen, ein Verfahren zur Herstellung dieser Partikel, die Verwendung dieser Partikel in Wasch-, Spül- oder Reinigungsmitteln, sowie Wasch-, Spül- oder Reinigungsmitteln, die diese Partikel enthalten.

Sodahaltige Granulate sind in der Wasch- und Reinigungsmittelindustrie von hohem Interesse. Zum einen bieten sie Vorteile bei der Verarbeitung, da keine unerwünschten Stäube entstehen, zum anderen lassen sie sich zum Beispiel bequem zu granularen Waschmitteln beimischen oder erhöhen die Löslichkeit von Waschmitteltabletten. Dabei stellt sich unter anderem die Frage nach der Lagerbarkeit dieser Granulate. Bei der Lagerung in Silos spielt die Kornstabilität von Partikeln eine große Rolle. Partikel mit geringer Kornstabilität werden im Silo zerdrückt und verklumpen dabei. Weiterhin ist die Kornstabilität beim Transport wichtig. Durch langen Transport und Rütteln zerfallen instabile Partikel-Körner, was dazu führt, daß einzelne Bestandteile als Feinkom entmischt sich am Packungsboden sammeln und somit neben Problemen der Rezepturkonstanz durch Entmischungsvorgänge, auch ein vom Verbraucher nicht gewünschtes Erscheinungsbild des Produktes liefern.

Bei der Herstellung von Granulaten zum Beispiel hat es sich gezeigt, daß es im technischen Rahmen schwierig ist, stabile Granulate zu erhalten. Dies gilt insbesondere für Granulate mit sehr hohem Gehalt an Soda, die in vielen Bereichen von Waschmittel-Formulierern gewünscht werden. Grund dafür ist, daß es sich bei Soda um eine vergleichsweise grobkristalline Substanz handelt, die sich bei einem Granulationsprozeß nur schwer zu einem festen Korn verarbeiten läßt.

Dabei konnte allerdings beobachtet werden, daß vor allem frische, sehr trockene Soda Schwierigkeiten bei der Herstellung stabiler Partikel bereitet und daß Soda, die einen gewissen Verwitterungsprozeß durchlaufen hat, zu stabileren Partikeln führt. Dieser Verwitterungsprozeß besteht einfach darin, die Roh-Soda, die im allgemeinen sehr frisch und sehr trocken geliefert wird, zunächst einige Zeit an Luft stehen zu lassen. Dabei hängt der Verwitterungsprozeß von vielen, zum Teil unbekannten Variablen ab, so daß über dessen Dauer und Verlauf keine Aussagen gemacht werden können. Der naheliegende Versuch, den Verwitterungsprozeß zum Beispiel durch Aufsprühen bestimmter Mengen Wasser zu simulieren, führte nicht zum gewünschten Ergebnis.

Aufgabe der vorliegenden Erfindung war es daher, mechanisch stabile Soda-Partikel bereitzustellen, ein Herstellungverfahren zu finden, das diesen unberechenbaren und vom wirtschaftlichen Standpunkt aus betrachtet nachteiligen Verwitterungsprozeß unnötig macht und das trotz Verwendung von frischer, sehr trockener, unverwitterter Soda zu stabilen hoch sodahaltigen Partikeln führt.

Überraschenderweise wurde gefunden, daß der Ersatz von geringen Mengen frischer, trockener Roh-Soda gegen die gleiche Menge anderer Rohstoffe die Herstellung von stabilen, hoch sodahaligen Partikeln ermöglicht.

Die Erfindung betrifft dementsprechend die Bereitstellung mechanisch stabiler Partikel, die überwiegend aus Soda bestehen und die 0,1 bis 10 Gew.-%, bezogen auf das Gesamt-Partikelgewicht, eines oder mehrerer Stabilisatoren und eine ausreichenden Menge Wasser als Agglomerationshilfsmittel umfassen.

Die Erfindung betrifft außerdem ein Verfahren zur Herstellung mechanisch stabiler, überwiegend aus Soda bestehender Partikel mit einem Gehalt an einem oder mehreren Stabilisatoren von 0,1 bis 10 Gew.-%, bezogen auf das Gesamt-Partikelgewicht, und einer ausreichenden Menge Wasser als Agglomerationshilfsmittel, worin die Roh-Soda und eine ausreichende Menge Wasser als Agglomerationshilfsmittel mit einem oder mehreren Stabilisatoren innig vermischt wird und das entstandene Gemisch auf an sich bekannte Weise zu Partikeln geformt wird.

Darüber hinaus betrifft die Erfindung die Verwendung erfindungsgemäßer, mechanisch stabiler, überwiegend aus Soda bestehender Partikel in Wasch-, Spül- oder Reinigungsmitteln sowie Wasch-, Spül- oder Reinigungsmittel mit an sich bekannten wasch-, spül- oder reinigungsaktiven Komponenten in den an sich bekannten Mengen und gegebenenfalls mit den üblichen Trägern und Hilfsstoffen, mit einem Gehalt an mechanisch stabilen, überwiegend aus Soda bestehenden Partikeln, in einer Menge von bevorzugt bis zu 50 Gew.-%, besonders bevorzugt bis zu 25 Gew.-% und ganz besonders bevorzugt bis zu 15 Gew.-%, bezogen auf das Gesamt-Gewicht des Mittels.

Der wissenschaftliche Hintergrund des erfindungsgemäßen Vorgangs wird noch nicht voll verstanden. Erste Untersuchungen zeigen allerdings, daß auf der Oberfläche von sodahaltigen Partikeln beim Lagern Änderungen im Kristallgitter stattfinden, die sich nicht allein auf die Aufnahme von Wasser aus der Atmosphäre oder die Bildung von Natriumhydrogencarbonat zurückführen lassen. Es könnten möglicherweise Kristallite entstehen, die beim Herstellungsprozeß der Partikel miteinander verhaken und die Bildung derartiger Kristallite könnte bei der Verwendung frischer, trockener Soda mit geringen Mengen Natriumhydrogencarbonat oder Natriumsesquicarbonat oder Zeolithen ebenfalls auftreten.

Unter dem Begriff Roh-Soda wird die Soda verstanden, wie sie direkt ab Werk vom Lieferanten bezogen wird. Diese Soda ist im allgemeinen sehr trocken, mit Wassergehalten von weniger als 0,5 Gew.-%, und ist meist noch nicht verwittert.

Die erfindungsgemäßen, mechanisch stabilen Partikel bestehen überwiegend aus Soda. Damit ist gemeint, daß sie mehr als 50 Gew-%, vorzugsweise mehr als 65 Gew.-%, weiter bevorzugt mehr als 70 Gew.-%, bezogen auf

das Geaamt-Partikelgewicht, Soda enthalten.

Mit Stabilisator ist ein Stoff gemeint, der durch seine Beimischung in geringer Menge zum zu agglomerierenden Gemisch zu einem besseren Agglomerationsergebnis, sprich zu Agglomeraten mit verbesserter Kornstabilität, führt. Die erfindungsgemäßen, mechanisch stabilen Partikel können 0,1 bis 10 Gew.%, bevorzugt 1 bis 5 Gew.-%, bezogen auf das Gesamt-Partikelgewicht, eines oder mehrerer dieser Stabilisatoren enthalten. Vor allem die Beimischung von bestimmten anorganischen wie organischen Buildern führt zu diesem Effekt. Aus der Gruppe der anorganischen Builder, sind dabei Alkalimetallhydrogencarbonate und/oder Alkalimetallsesquicarbonate und/oder Alkalimetallaluminosilicate bevorzugt. Besonders bevorzugt in diesem Zusammenhang sind Natriumhydrogencarbonat und/oder Natriumsesquicarbonat und/oder Zeolith A und ganz besonders bevorzugt ist Natriumhydrogencarbonat. Aber auch organische Builder wie Polyacrylate oder copolymere Polycarboxylate sind als Beimischungen für die Verbesserung der Kornstabilität geeignet. Natriumhydrogencarbonat ist ganz besonders bevorzugt, weil dessen Verwendung als Stabilisator zu einem spröden, und damit in der Wasch- und Reinigungsmittelindustrie besonders gut geeigneten, mechanisch stabilen Korn führt.

Unter der Kornstabilität der Partikel wird die mechanische Beanspruchbarkeit der Partikel-Körner verstanden. Partikel mit geringer Kornstabilität zerfallen schon unter geringem Druck, während Partikel mit hoher Kornstabilität höherem Druck standhalten ohne die strukturelle Integrität zu verlieren. Die Kornstabilität läßt sich über die Bestimmung der Schüttgutfestigkeit und mit Hilfe eines Abriebtests quantifizieren. Beide Tests werden im Beispielteil näher beschrieben. Die Schüttgutfestigkeit ist ein reziprokes Maß für die mechanische Stabilität der Partikel und kann mit Hilfe eines Johanson Indicizers ermittelt werden. Im Rahmen der angestellten Untersuchungen wurde festgestellt, daß die Kornstabilität gut ist, wenn die Soda-Partikel bei einer Verfestigungsspannung von 45000 Pa Schüttgutfestigkeiten von höchstens 8000 Pa aufweisen, wobei höchstens 5000 Pa sehr gut sind.

Zur Herstellung der erfindungsgemäßen mechanisch stabilen, überwiegend aus Soda bestehenden Partikel wird die Roh-Soda mit einer ausreichenden Menge Wasser als Agglomerationshilfsmittel und mit einem oder mehreren Stabilisatoren innig vermischt und auf an sich bekannte Art und Weise zu Partikeln geformt. Als Stabilisator kommt dabei Alkalimetallhydrogencarbonat und/oder Alkalimetallsesquicarbonat und/oder Alkalimetallluminosilicat, bevorzugt Natriumhydrogencarbonat und/oder Natriumsesquicarbonat und/oder Zeolith A, besonders bevorzugt Natriumhydrogencarbonat, in einer Menge von 0,1 bis 10 Gew.-%, bevorzugt in einer Menge von 1 bis 5 Gew.-%, bezogen auf das Gesamt-Partikelgewicht zum Einsatz. Außer den genannten Bestandteilen Soda, Stabilisator und Wasser werden bei der Agglomeration ein oder mehrere weitere Inhaltsstoffe, wie sie in Wasch- oder Reinigungsmitteln üblich sind, zugesetzt, und zwar vorzugsweise in Mengen von 2 bis 40 Gew.-%, insbesondere in Mengen von 10 bis 30 Gew.-%, bezogen auf das Gesamt-Partikelgewicht. Diese Inhaltsstoffe werden weiter unten näher beschrieben. Beim Agglomerationsverfahren kann es sich um eine Granulation, eine Extrudierung, eine Walzenkompaktierung oder eine Pellettierung handeln, bevorzugt ist es aber eine Granulation. Nach der Agglomeration werden die entstandenen Partikel getrocknet. Dementsprechend fallen die erfindungsgemäßen Partikel in Form von Pulvern, Granulaten, Extrudaten, Walzenkompaktaten oder Pellets, insbesondere in Form von Granulaten an, die bis zu 10 Gew.-%, bezogen auf das Gesamt-Partikelgewicht, bevorzugt 1 bis 10 Gew.-%, Wasser enthalten.

Die erfindungsgemäßen, mechanisch stabilen Partikel können neben der Soda, dem Stabilisator und Wasser noch alle bekannten und in Wasch- und Reinigungsmitteln üblichen Inhaltsstoffe wie zum Beispiel Tenside, Gerüststoffe, Bleichmittel, Bleichaktivatoren, Enzyme, Schauminhibitoren, Farbstoffe, optische Aufheller, UV-Schutzsubstanzen, Duftstoffe und Parfüms, Parfümträger, Antiredepositionsmittel, Vergrauungsinhibitoren, Farbübertragungsinhibitoren und Korrosionsinhibitoren, vorzugsweise in Mengen von 2 bis 40 Gew.-%, insbesondere in Mengen von 10 bis 30 Gew.-%, bezogen auf das Gesamt-Partikelgewicht, enthalten.

Als anionische Tenside vom Sulfonat-Typ kommen vorzugsweise Cumolsulfonat, $C_{10-13}$-Alkylbenzolsulfonate, Olefinsulfonate, d.h. Gemische aus Alken- und Hydroxyalkansulfonaten sowie -disulfonaten, in Betracht, wie man sie beispielsweise aus $C_{12-18}$-Monoolefinen mit end- oder innenständiger Doppelbindung durch Sulfonieren mit gasförmigem Schwefeltrioxid und anschließende alkalische oder saure Hydrolyse der Sulfonierungsprodukte erhält. Geeignet sind auch Alkansulfonate, die aus $C_{12-18}$-Alkanen beispielsweise durch Sulfochlorierung oder Sulfoxidation mit anschließender Hydrolyse beziehungsweise Neutralisation gewonnen werden. Ebenso sind auch die Ester von 2-Sulfofettsäuren (Estersulfonate), zum Beispiel die 2-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der $C_{12-18}$-Fettalkohole, beispielsweise aus Kokosfettalkohol, Talgfettalkohol, Lauryl-, Myristyl-, Cetyl- oder Stearylalkohol

oder der $C_{10-20}$-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die $C_{12-16}$-Alkylsulfate und $C_{12-15}$-Alkylsulfate sowie $C_{14-15}$-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside.

Auch die Schwefelsäuremonoester der mit 1 bis 6 Mol Ethylenoxid ethoxylierten geradkettigen oder verzweigten $C_{7-21}$-Alkohole, wie 2-Methyl-verzweigte $C_{9-11}$-Alkohole mit im Durchschnitt 3,5 Mol Ethylenoxid (EO) oder $C_{12-18}$-Fettalkohole mit 1 bis 4 EO, sind geeignet.

Weitere geeignete Aniontenside sind auch die Salze der Alkylsulfobernsteinsäure, die auch als Sulfosuccinate oder als Sulfobernsteinsäureester bezeichnet werden, und die Monoester und/oder Diester der Sulfobemsteinsäure mit Alkoholen, vorzugsweise Fettalkoholen und insbesondere ethoxylierten Fettalkoholen darstellen. Bevorzugte Sulfosuccinate enthalten $C_{8-18}$-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Als weitere anionische Tenside kommen insbesondere Seifen in Betracht. Geeignet sind gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, zum Beispiel Kokos-, Palmkem- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor. In einer weiteren Ausführungsform der Erfindung werden Tenside in Form ihrer Magnesiumsalze eingesetzt.

Als nichtionische Tenside werden vorzugsweise alkoxylierte, vorteilhafterweise ethoxylierte oder propoxylierte, insbesondere primäre Alkohole mit vorzugsweise 8 bis 18 C-Atomen und durchschnittlich 1 bis 80, bevorzugt 3 bis 12 Mol Ethylenoxid (EO) pro Mol Alkohol eingesetzt, in denen der Alkoholrest linear oder bevorzugt in 2-Stellung methylverzweigt sein kann beziehungsweise lineare und methylverzweigte Reste im Gemisch enthalten kann, so wie sie üblicherweise in Oxoalkoholresten vorliegen. Beispiele für die Fettalkohole sind aus Sicht der Verfügbarkeit der Verbindungen Laurylalkohol ($C_{12}$), Myristylalkohol ($C_{14}$), Cetylalkohol ($C_{16}$) usw. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 1 bis 80, bevorzugt 2 bis 8 EO pro Mol Alkohol bevorzugt. Zu den bevorzugten ethoxylierten Alkoholen gehören beispielsweise $C_{12-14}$-Alkohole mit 3 EO oder 4 EO, $C_{9-11}$-Alkohol mit 7 EO, $C_{13-15}$-Alkohole mit 3 EO, 5 EO, 7 EO oder 8 EO, $C_{12-18}$-Alkohole mit 3 EO, 5 EO oder 7 EO und Mischungen aus diesen, sowie Mischungen aus $C_{12-14}$-Alkohol mit 3 EO und $C_{12-18}$-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO, 40 EO oder bis zu 80 EO.

Eine weitere Klasse bevorzugt eingesetzter nichtionischer Tenside, die entweder als alleiniges nichtionisches Tensid oder in Kombination mit anderen nicht-ionischen Tensiden eingesetzt werden, sind alkoxylierte, vorzugsweise ethoxylierte oder ethoxylierte und propoxylierte Fettsäurealkylester, vorzugsweise mit 1 bis 8 Kohlenstoffatomen in der Alkylkette und 3 bis 80, bevorzugt bis 20 Alkoxygruppen, bevorzugt Ethoxygruppen im Molekül, insbesondere Fettsäuremethylester, wie sie beispielsweise in der japanischen Patentanmeldung **JP-58/217598** beschrieben sind oder die bevorzugt nach dem in der internationalen Patentanmeldung **WO-A-90/13533** offenbarten Verfahren hergestellt werden.

Eine weitere Klasse von nichtionischen Tensiden, die vorteilhaft eingesetzt werden kann, sind die Alkylpolyglycoside (APG). Einsetzbare Alkylpolyglycoside genügen der allgemeinen Formel $RO(G)_z$, in der R für einen linearen oder verzweigten, insbesondere in 2-Stellung methylverzweigten, gesättigten oder ungesättigten, aliphatischen Rest mit 8 bis 22, vorzugsweise 12 bis 18 C-Atomen steht und G das Symbol ist, das für eine Glykoseeinheit mit 5 oder 6 C-Atomen, vorzugsweise für Glucose, steht. Der Glycosidierungsgrad z liegt dabei zwischen 1,0 und 4,0, vorzugsweise zwischen 1,0 und 2,0 und insbesondere zwischen 1,1 und 1,4.

Bevorzugt eingesetzt werden lineare Alkylpolyglucoside, also Alkylpolyglycoside, in denen der Polyglycosylrest ein Glucoserest und der Alkylrest ein n-Alkylrest ist.

Auch nichtionische Tenside vom Typ der Aminoxide, beispielsweise N-Kokosalkyl-N,N-dimethylaminoxid und

N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (I),

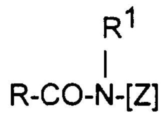

(I)

in der RCO für einen aliphatischen Acylrest mit 6 bis 22 Kohlenstoffatomen, $R^1$ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (II),

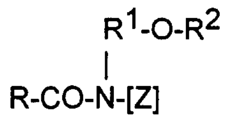

(II)

in der R für einen linearen oder verzweigten Alkyl- oder Alkenylrest mit 7 bis 12 Kohlenstoffatomen, $R^1$ für einen linearen, verzweigten oder cyclischen Alkylrest oder einen Arylrest mit 2 bis 8 Kohlenstoffatomen und $R^2$ für einen linearen, verzweigten oder cyclischen Alkylrest oder einen Arylrest oder einen Oxy-Alkylrest mit 1 bis 8 Kohlenstoffatomen steht, wobei $C_{1-4}$-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propxylierte Derivate dieses Restes.

[Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielsweise nach der Lehre der internationalen Anmeldung **WO-A-95/07331** durch Umsetzung mit Fettsäuremethylestern in Gegenwart eines Alkoxids als Katalysator in die gewünschten Polyhydroxyfettsäureamide überführt werden.

Aus praktischer Sicht wird mit Vorteil zu berücksichtigen sein, daß solche Verbindungen aus den oben genannten Gruppen verwendet werden, die auch bei größeren Kettenlängen bei den Anwendungstemperaturen noch flüssig bis pastös sind.

Weiterhin kann es bevorzugt sein, neben anionischen und nichtionischen Tensiden auch kationische Tenside einzusetzen. Ihr Einsatz erfolgt dabei bevorzugt als Waschleistungsbooster, wobei nur kleine Mengen an kationischen Tensiden erforderlich sind.

In den erfindungsgemäßen hoch sodahaltigen Partikel können üblicherweise auch Gerüststoffe enthalten sein, insbesondere also Zeolithe, Silicate, organische Cobuilder und - wo keine ökologischen Vorurteile gegen ihren Einsatz bestehen - auch Phosphate. Die genannten Builder üben eine stabilisierende Wirkung auf die erfindungsgemäßen Partikel aus und können dann im Sinne der obenstehend definierten Stabilisatoren eingesetzt werden.

Als anorganische Builder geeignete kristalline, schichtförmige Natriumsilicate besitzen die allgemeine Formel $NaMSi_xO_{2x+1}$. y $H_2O$, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilicate werden beispielsweise in der europäischen Patentanmeldung **EP-A-0 164 514** beschrieben. Bevorzugte kristalline Schichtsilikate der angegebenen Formel sind solche, in denen M für Natrium steht und x die Werte 2 oder 3 annimmt. Insbesondere sind sowohl β- als auch δ-Natriumdisilicate $Na_2Si_2O_5 \cdot y\ H_2O$ bevorzugt, wobei ß-Natriumdisilicat beispielsweise nach dem Verfahren erhalten werden kann, das in der internationalen Patentanmeldung **WO-A-91/08171** beschrieben ist.

Einsetzbar sind auch amorphe Natriumsilicate mit einem Modul $Na_2O : SiO_2$ von 1 : 2 bis 1 : 3,3, vorzugsweise von 1 : 2 bis 1 : 2,8 und insbesondere von 1 : 2 bis 1 : 2,6, welche löseverzögert sind und Sekundärwascheigenschaften aufweisen. Die Löseverzögerung gegenüber herkömmlichen amorphen Natriumsilicaten kann dabei auf verschiedene Weise, beispielsweise durch Oberflächenbehandlung, Compoundierung, Kompaktierung/ Verdichtung oder durch Übertrocknung hervorgerufen worden sein. Im Rahmen dieser Erfindung wird unter dem Begriff "amorph" auch "röntgenamorph" verstanden. Dies heißt, daß die Silicate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silicatpartikel bei Elektronenbeugungsexperimenten verwaschene oder sogar scharfe Beugungsmaxima liefern. Dies ist so zu interpretieren, daß die Produkte mikrokristalline Bereiche der Größe 10 bis einige Hundert nm aufweisen, wobei Werte bis max. 50 nm und insbesondere bis max. 20 nm bevorzugt sind. Derartige sogenannte röntgenamorphe Silicate, welche ebenfalls eine Löseverzögerung gegenüber den herkömmlichen Wassergläsern aufweisen, werden beispielsweise in der deutschen Patentanmeldung **DE-A-44 00 024** beschrieben. Insbesondere bevorzugt sind verdichtete/kompaktierte amorphe Silicate, compoundierte amorphe Silicate und übertrocknete röntgenamorphe Silicate.

Brauchbar sind auch alle anderen Natriumsilicate, z.B. auch nicht löseverzögerte Natriumsilicate, sofern sie Buildereigenschaften aufweisen. In Frage kommen z.B. Natron- und/oder Kali-Wassergläser mit einem Modul $(Na, K)_2O : SiO_2$ von 1 : 1 bis 1 : 4,5, vorzugsweise von 1 : 2 bis 1 : 3,5 und insbesondere von 1 : 2 bis 1 : 2,65. Diese können natürlicher Herkunft sein oder synthetisch hergestellt worden sein. Letztere können in Form von sprühgetrockneten, pulverförmigen Wassergläsem eingesetzt werden oder in Form von flüssigen Wassergläsern. Geeignete Wassergläser sind z.B. Britesil C 20 (Fa. P.Q. Silica) und Pyramid P (Fa. Crosfield).

Ein gegebenenfalls eingesetzter feinkristalliner, synthetischer und gebundenes Wasser enthaltender Zeolith ist vorzugsweise Zeolith A und/oder P. Als Zeolith des P-Typs wird Zeolith MAP (z.B. Handelsprodukt: Doucil A24 der Firma Crosfield) besonders bevorzugt. Geeignet sind jedoch auch Zeolith X sowie Mischungen aus A, X und/oder P. Kommerziell erhältlich und im Rahmen der vorliegenden Erfindung bevorzugt einsetzbar ist beispielsweise auch ein Co-Kristallisat aus Zeolith X und Zeolith A (ca. 80 Gew.-% Zeolith X), das von der Firma CONDEA Augusta S.p.A. unter dem Markennamen VEGOBOND AX® vertrieben wird und durch die Formel

$$n\ Na_2O\cdot(1-n)\ K_2O\cdot Al_2O_3\cdot(2 - 2{,}5)\ SiO_2\cdot(3{,}5 - 5{,}5)\ H_2O$$

$$n = 0.90 - 1.00$$

beschrieben werden kann. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser.

Selbstverständlich ist in Waschmitteln auch ein Einsatz der allgemein bekannten Phosphate als Buildersubstanzen möglich, sofern ein derartiger Einsatz nicht aus ökologischen Gründen vermieden werden sollte. Geeignet sind insbesondere die Natriumsalze der Orthophosphate, der Pyrophosphate und insbesondere der Tripolyphosphate.

Die genannten anorganischen Builder üben eine stabilisierende Wirkung auf die erfindungsgemäßen Partikel aus und können dann im Sinne der obenstehend definierten Stabilisatoren eingesetzt werden.

Brauchbare organische Gerüstsubstanzen sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern deren Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen. Auch die Säuren an sich können eingesetzt werden. Insbesondere sind in diesem Zusammenhang Citronensäure, Bernsteinsäure, Glutarsäure, Adipinsäure, Gluconsäure und beliebige Mischungen von diesen zu nennen.

Als Builder sind weiter polymere Polycarboxylate geeignet. Dies sind beispielsweise die Alkalimetallsalze der Polyacrylsäure oder der Polymethacrylsäure, beispielsweise solche mit einer relativen Molekülmasse von 500 bis 70000 g/mol.

Geeignete Polymere sind insbesondere Polyacrylate, die bevorzugt eine Molmasse von 2000 bis 20000 g/mol aufweisen. Aufgrund ihrer überlegenen Löslichkeit können aus dieser Gruppe wiederum die kurzkettigen Polyacrylate bevorzugt sein, die Molmassen von 2000 bis 10000 g/mol, besonders bevorzugt von 3000 bis 5000 g/mol, aufweisen.

Geeignet sind weiterhin copolymere Polycarboxylate, insbesondere solche der Acrylsäure mit Methacrylsäure oder der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molmasse, bezogen auf freie Säuren, beträgt im allgemeinen 2000 bis 70000 g/mol, vorzugsweise 20000 bis 50000 g/mol und insbesondere 30000 bis 40000 g/mol.

Die (co-)polymeren Polycarboxylate können entweder als Pulver oder als wäßrige Lösung eingesetzt werden.

Der Gehalt der erfindungsgemäßen Wasch- oder Reinigungsmittel-Portionen an (co-)polymeren Polycarboxylaten beträgt vorzugsweise 0,5 bis 20 Gew.-%, insbesondere 3 bis 10 Gew.-%.

Zur Verbesserung der Wasserlöslichkeit können die Polymere auch Allylsulfonsäuren, wie beispielsweise in der **EP-B-0 727 448**, Allyloxybenzolsulfonsäure und Methallylsulfonsäure als Monomer enthalten.

Insbesondere bevorzugt sich auch biologisch abbaubare Polymere aus mehr als zwei verschiedenen Monomereinheiten, beispielsweise solche, die gemäß der **DE-A-43 00 772** als Monomere Salze der Acrylsäure und der Maleinsäure sowie Vinylalkohol beziehungsweise Vinylalkohol-Derivate oder gemäß der **DE-C-42 21 381** als Monomere Salze der Acrylsäure und der 2-Alkylallylsulfonsäure sowie Zucker-Derivate enthalten.

Weiter bevorzugte Copolymere sind solche, die in den deutschen Patentanmeldungen **DE-A-43 03 320** und **DE-A-44 17 734** beschrieben werden und als Monomere vorzugsweise Acrolein und Acrylsäure/Acrylsäuresalze beziehungsweise Acrolein und Vinylacetat enthalten.

Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren beziehungsweise deren Salze und Derivate, von denen in der deutschen Patentanmeldung **DE-A-195 40 086** offenbart wird, daß sie neben Co-Builder-Eigenschaften auch eine bleichstabilisierende Wirkung aufweisen.

Weitere geeignete Buildersubstanzen sind Polyacetale, die durch Umsetzung von Dialdehyden mit Polyolcarbonsäuren erhalten werden können, die 5 bis 7 Kohlenstoffatome und mindestens 3 Hydroxygruppen aufweisen, beispielsweise wie beschrieben in der europäischen Patentanmeldung **EP-A-0 280 223**. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere beziehungsweise Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000 g/mol. Dabei ist ein Polysaccharid mit einem Dextrose-Äquivalent (DE) im Bereich von 0,5 bis 40, insbesondere von 2 bis 30, bevorzugt, wobei DE ein gebräuchliches Maß für die reduzierende Wirkung eines Polysaccharids im Vergleich zu Dextrose ist, welche ein DE von 100 besitzt. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2000 bis 30000 g/mol. Ein bevorzugtes Dextrin ist in der britischen Patentanmeldung 94 19 091 beschrieben.

Bei den oxidierten Derivaten derartiger Dextrine handelt es sich um deren Umsetzungsprodukte mit Oxidationsmitteln, die in der Lage sind, mindestens eine Alkoholfunktion des Saccharidrings zur Carbonsäurefunktion zu oxidieren. Derartige oxidierte Dextrine und Verfahren zu ihrer Herstellung sind insbesondere aus den europäischen Patentanmeldungen **EP-A-0 232 202, EP-A-0 427 349, EP-A-0 472 042** und **EP-A-0 542 496** sowie aus den internationalen Patentanmeldungen **WO-A-92/18542, WO-A-93/08251, WO-A-93/16110, WO-A-94/28030, WO-A-95/07303, WO-A-95/12619** und **WO-A-95/20608** bekannt. Ebenfalls geeignet ist ein oxidiertes Oligosaccharid gemäß der deutschen Patentanmeldung **DE-A-196 00 018.** Ein an $C_6$ des Saccharidrings oxidiertes Produkt kann besonders vorteilhaft sein.

Auch Oxydisuccinate und andere Derivate von Disuccinaten, vorzugsweise Ethylendiamindisuccinat sind weitere geeignete Co-Builder. Dabei wird Ethylendiamin-N,N'-disuccinat (EDDS), dessen Synthese beispielsweise in der Druckschrift **US 3,158,615** beschrieben wird, bevorzugt in Form seiner Natrium- oder Magnesiumsalze verwendet. Weiterhin bevorzugt sind in diesem Zusammenhang auch Glycerindisuccinate und Glycerintrisuccinate, wie sie beispielsweise in den US-Patentschriften **US 4,524,009** und **US 4,639,325,** in der europäischen Patentanmeldung **EP-A-0 150 930** und in der japanischen Patentanmeldung **JP-A-93/339896** beschrieben werden. Geeignete Einsatzmengen liegen in zeolithhaltigen und/oder silicathaltigen Formulierungen bei 3 bis 15 Gew.-%.

Weitere brauchbare organische Co-Builder sind beispielsweise acetylierte Hydroxycarbonsäuren beziehungsweise deren Salze, welche gegebenenfalls auch in Lactonform vorliegen können und welche mindestens 4 Kohlenstoffatome und wenigstens eine Hydroxygruppe sowie maximal zwei Säuregruppen enthalten. Derartige Co-Builder werden beispielsweise in der internationalen Patentanmeldung **WO-A-95/20029** beschrieben.

Eine weitere Substanzklasse mit Co-Builder-Eigenschaften stellen die Phosphonate dar. Dabei handelt es sich insbesondere um Hydroxyalkan- beziehungsweise Aminoalkanphosphonate. Unter den Hydroalkanphosphonaten ist das 1-Hydroxyethan-1,1-diphosphonat (HEDP) von besonderer Bedeutung als Co-Builder. Es wird vorzugsweise als Natriumsalz eingesetzt, wobei das Dinatriumsalz neutral und das Tetranatriumsalz alkalisch (pH = 9) reagiert. Als Aminoalkanphosphonate kommen vorzugsweise Ethylendiamitetramethylenphosphonat (EDTMP), Diethylentriaminpentamethylenphosphonat (DTPMP) sowie deren höhere Homologe in Frage. Sie werden vorzugsweise in Form der neutralreagierenden Natriumsalze, zum Beispiel als Hexanatriumsalz der EDTMP beziehungsweise als Hepta- und Octanatriumsalz der DTPMP, eingesetzt. Als Builder wird dabei aus der Klasse der Phosphonate bevorzugt HEDP verwendet. Die Aminoalkanphosphonate beitzen zudem ein ausgeprägtes Schwermetallbindevermögen. Dementsprechend kann es, insbesondere wenn die erfindungsgemäßen hoch sodahaltigen Partikel auch Bleiche enthalten, bevorzugt sein, Aminoalkanphosphonate, insbesondere DTPMP, einzusetzen oder Mischungen aus den genannten Phosphonaten zu verwenden.

Darüber hinaus können alle Verbindungen, die in der Lage sind, Komplexe mit Erdalkalimetallionen zu bilden, als Co-Builder eingesetzt werden.

Die genannten organischen Builder üben eine stabilisierende Wirkung auf die erfindungsgemäßen Partikel aus und können dann im Sinne der obenstehend definierten Stabilisatoren eingesetzt werden.

Unter den als Bleichmittel dienenden, in Wasser $H_2O_2$ liefernden Verbindungen haben das Natriumperborattetrahydrat und das Natriumperborat-monohydrat besondere Bedeutung. Weitere brauchbare Bleichmittel sind beispielsweise Natriumpercarbonat, Peroxypyrophosphate, Citratperhydrate sowie $H_2O_2$ liefernde persaure Salze oder Persäuren, wie Perbenzoate, Peroxophthalate, Diperazelainsäure, Phthaloiminopersäure oder Diperdodecandisäure. Typische organische Bleichmittel sind die Diacylperoxide, wie zum Beispiel Dibenzoylperoxid. Weitere typische organische Bleichmittel sind die Peroxysäuren, wobei als Beispiele besonders die Alkylperoxysäuren und die Arylperoxysäuren genannt werden. Bevorzugte Vertreter sind (a) die Peroxybenzoesäure und ihre ringsubstituierten Deriate, wie Alkylperoxybenzoesäuren, aber auch Peroxy-$\alpha$-Naphtoesäure und Magnesiummonoperphthalat; (b) die aliphatischen oder substituiert aliphatischen Peroxysäuren, wie Peroxylaurinsäure, Peroxystearinsäure, $\varepsilon$-Phthalimidoperoxy-capronsäure [Phthaloiminoeroxyhexansäure (PAP)], o-Carboxybenzamido-peroxycapronsäure, N-Nonenylamidoperadipinsäure und N-Nonenylamidoper-succinate; und (c) aliphatische und araliphatische Peroxydicarbonsäuren, wie 1,12-Diperoxycarbonsäure, 1,9-Diperoxyazelainsäure, Diperocysebacinsäure, Diperoxybrassylsäure, die Diperoxyphthalsäuren, 2-Decyldiperoxybutan-1,4-disäure, N,N-Terephthaloyl-di(6-aminopercapronsäue) können eingesetzt werden.

Als Bleichmittel können im Prinzip auch Chlor oder Brom freisetzende Substanzen eingesetzt werden. Diese sind jedoch für den Einsatz in Waschmitteln von geringer Bedeutung. Unter den geeigneten Chlor oder Brom freisetzenden Materialien kommen beispielsweise heterocyclische N-Brom- und N-Chloramide, beispielsweise Trichlorisocyanursäure, Tribromisocyanursäure, Dibromisocyanursäure und/oder Dichlorisocyanursäure (DICA) und/oder deren Salze mit Kationen wie Kalium und Natrium in Betracht. Hydantoinverbindungen, wie 1,3-Dichlor-5,5-dimethylhydanthoin sind ebenfalls geeignet.

Außerdem können Bleichaktivatoren in die hoch sodahaltigen Partikel eingearbeitet werden. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- beziehungsweise iso-NOBS), Carbonsäureanhydride, insbesondere Phthalsäureanhydrid, acylierte mehrwertige Alkohole, insbesondere Triacetin, Ethylenglykoldiacetat und 2,5-Diacetoxy-2,5-dihydrofuran.

Zusätzlich zu den konventionellen Bleichaktivatoren oder an deren Stelle können auch sogenannte Bleichkatalysatoren in die hoch sodahaltigen Partikel eingearbeitet werden. Bei diesen Stoffen handelt es sich um bleichverstärkende Übergangsmetallsalze beziehungsweise Übergangsmetallkomplexe wie beispielsweise Mn-, Fe-, Co-, Ru- oder Mo-Salenkomplexe oder -Carbonylkomplexe. Auch Mn-, Fe-, Co-, Ru-, Mo-, Ti-, V- und Cu-Komplexe mit N-haltigen Tripod-Liganden sowie Co-, Fe-, Cu- und Ru-Amminkomplexe sind als Bleichkatalysatoren verwendbar.

Als Enzyme kommen solche aus der Klasse der Proteasen, Lipasen, Amylasen, Cellulasen beziehungsweise deren Gemische in Frage. Besonders gut geeignet sind aus Bakterienstämmen oder Pilzen, wie Bacillus subtilis, Bacillus licheniformis und Streptomyces griseus gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Proease und Lipase oder Protease und Cellulase oder aus Cellulase und Lipase oder aus Protease, Amylase und Lipase oder Protease, Lipase und Cellulase, insbesondere jedoch Cellulase-haltige Mischungen von besonderem Interesse. Auch Peroxidasen oder Oxidasen haben sich in einigen Fällen als geeignet erwiesen. Die Enzyme können an Trägerstoffen adsorbiert und/oder in Hüllsubstanzen eingebettet sein, um sie gegen vorzeitige Zersetzung zu schützen.

Weitere in den hoch sodahaltigen Partikeln denkbare Zusätze sind Schauminhibitoren wie zum Beispiel schauminhibierendes Paraffinöl oder schauminhibierendes Siliconöl, beispielsweise Polydimethylsiloxan. Auch der Einsatz von Mischungen dieser Wirkstoffe ist möglich. Als bei Raumtemperatur feste Zusatzstoffe kommen, insbesondere bei den genannten schauminhibierenden Wirkstoffen, Paraffinwachse, Kieselsäuren, die auch in bekannter Weise hydrophobiert sein können, und von $C_{2-7}$-Diaminen und $C_{12-22}$-Carbonsäuren abgeleitete Bisamide in Frage.

Für den Einsatz in den erfindungsgemäßen hoch sodahaltigen Partikeln in Frage kommende schauminhibierende Paraffinöle, die in Abmischung mit Paraffinwachsen vorliegen können, stellen im allgemeinen komplexe Stoffgemische ohne scharfen Schmelzpunkt dar. Zur Charakterisierung bestimmt man üblicherweise den Schmelzbereich durch Differential-Thermo-Analyse (DTA), wie in **"The Analyst" 87 (1962), 420,** beschrieben, und/- oder den Erstarrungspunkt. Darunter versteht man die Temperatur, bei der das Paraffin durch langsames Abkühlen aus dem flüssigen in den festen Zustand übergeht. Paraffine mit weniger als 17 C-Atomen sind erfindungsgemäß nicht brauchbar, ihr Anteil im Paraffinölgemisch sollte daher so gering wie möglich sein und liegt vorzugsweise unterhalb der mit üblichen analytischen Methoden, zum Beispiel Gaschromatographie, signifikant meßbaren Grenze. Vorzugsweise werden Paraffine verwendet, die im Bereich von 20°C bis 70°C erstarren. Dabei ist zu beachten, daß auch bei Raumtemperatur fest erscheinende Paraffinwachsgemische unterschiedliche Anteile an flüssigen Paraffinölen enthalten können. Bei den erfindungsgemäß brauchbaren Paraffinwachsen liegt der Flüssiganteil bei 40°C möglichst hoch, ohne bei dieser Temperatur schon 100 % zu betragen. Bevorzugte Paraffinwachsgemische weisen bei 40°C einen Flüssiganteil von mindestens 50 Gew.-%, insbesondere von 55 Gew.-% bis 80 Gew.-%, und bei 60°C einen Flüssiganteil von mindestens 90 Gew.-% auf. Dies hat zur Folge, daß die Paraffine bei Temperaturen bis hinunter zu mindestens 70°C, vorzugsweise bis hinunter zu mindestens 60°C fließfähig und pumpbar sind. Außerdem ist darauf zu achten, daß die Paraffine möglichst keine flüchtigen Anteile enthalten. Bevorzugte Paraffinwachse enthalten weniger als 1 Gew.-%, insbesondere weniger als 0,5 Gew.-% bei 110°C und Normaldruck verdampfbare Anteile. Erfindungsgemäß brauchbare Paraffine können beispielsweise unter den Handelsbezeichnungen Lunaflex® der Firma Fuller sowie Deawax® der DEA Mineralöl AG bezogen werden.

Anstelle des Paraffinwachses können auch Siliconöl oder Gemische aus Paraffinwachs mit Siliconöl eingesetzt werden. Die Bezugnahme auf Siliconöl bedeutet im Rahmen der vorliegenden Erfindung immer auch dessen Abmischung mit feinteiligen Füllstoffen, beispielsweise hydrophilem oder hydrophobem Siliciumdioxid, sogenannter hochdisperser Kieselsäure. Dabei ist pyrogenes oder gefälltes, insbesondere hydrophobiertes Siliciumdioxid mit einer Oberfläche von mindestens 50 $m^2/g$ besonders bevorzugt, wie es beispielsweise under den Bezeichnungen Aerosil® oder Sipemat® im Handel erhältlich ist. In einer Ausführungsform der Erfindung ist Siliconöl, beispielsweise Polydimethylsiloxan,

Die Paraffinöle können bei Raumtemperatur feste Bisamide, die sich von gesättigten Fettsäuren mit 12 bis 22, vorzugsweise 14 bis 18 C-Atomen sowie von Alkylendiaminen mit 2 bis 7 C-Atomen ableiten, enthalten. Geeignete Fettsäuren sind Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Geeignete Diamine sind beispielsweise Ethylendiamin 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bis-myristoyl-ethylendiamin, Bis-palmitoyl-ethylendiamin, Bis-stearoyl-ethylendiamin und deren Gemische sowie die entsprechenden Derivate des Hexamethylendiamins.

Weiterhin können Farbstoffe, insbesondere wasserlösliche oder wasserdispergierbare Farbstoffe eingearbeitet. Bevorzugt sind hier Farbstoffe, wie sie zur Verbesserung der optischen Produktanmutung in Wasch- und Reinigungsmittel üblicherweise eingesetzt werden. Die Auswahl derartiger Farbstoffe bereitet dem Fachmann keine Schwierigkeiten, insbesondere da derartige übliche Farbstoffe eine hohe Lagerstabilität und Unempfindlichkeit gegenüber den übrigen Inhaltsstoffen der waschaktiven Zubereitungen und gegen Licht sowie keine ausgeprägte Substantivität gegenüber Textilfasern haben, um diese nicht anzufärben.

Beispiele für optische Aufheller sind Derivate von Diaminostilbendisulfonsäure beziehungsweise deren Alkalimetallsalze. Geeignet sind z.B. Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolamino-Gruppe, eine Methylamino-Gruppe, eine Anilino-Gruppe oder eine 2-Methoxyethylamino-Gruppe tragen. Weiterhin können Aufheller vom Typ der substituierten Diphenylstyryle in den Teil-Portionen (waschaktiven Zubereitungen) der erfindungsgemäßen Wasch- oder Reinigungsmittel-Portionen enthalten sein, z.B. die Alkalisalze des 4,4'-Bis(2-sulfostyryl)diphenyls, 4,4'-Bis(4-chlor-3-sulfostyryl)diphenyls oder 4-(4-Chlorstyryl)-4'-(2-sulfostyryl)diphenyls. Auch Gemische der vorgenannten Aufheller können verwendet werden.

Eine weitere erfindungsgemäß bevorzugte Gruppe von Zusätzen sind UV-Schutzsubstanzen. Dabei handelt es sich um Stoffe, die beim Waschprozeß oder bei dem nachfolgenden Weichspülprozeß in der Waschflotte freigesetzt werden und die sich auf der Faser akkumulativ anhäufen, um dann einen UV-Schutz-Effekt zu erzielen. Geeignet sind die unter der Bezeichnung Tinosorb im Handel befindlichen Produkte der Firma Ciba Speciality Chemicals.

Eine weitere Klasse von üblichen Wasch- und Reinigungsmittelinhaltsstoffen, die erfindungsgemäß den hoch sodahaltigen Partikeln zugesetzt werden kann, sind Polymere. Unter diesen Polymeren kommen zum einen Polymere in Frage, die beim Waschen oder Reinigen beziehungsweise Spülen Cobuilder-Eigenschaften zeigen. Diese wurden oben bereits eingehend beschrieben.

Eine weitere Gruppe von Polymeren sind Vergrauungsinhibitoren. Diese haben die Aufgabe, den von der harten Oberfläche und insbesondere von der Textilfaser abgelösten Schmutz in der Flotte suspendiert zu halten und so den Co-Builder zu unterstützen. Hierzu sind wasserlösliche Kolloide meist organischer Natur geeignet, beispielsweise Leim, Gelatine, Salze von Ethercarbonsäuren oder Ethersulfonsäuren der Stärke oder der Cellulose oder Salze

von sauren Schwefelsäureestern der Cellulose oder der Stärke. Auch wasserlösliche, saure Gruppen enthaltende Polyamide sind für diesen Zweck geeignet. Weiterhin lassen sich andere als die obengenannten Stärkeprodukte verwenden, zum Beispiel Aldehydstärken. Bevorzugt werden Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, beispielsweise in Mengen von 0,1 bis 5 Gew.-%, bezogen auf die hoch sodahaltigen Partikel, eingesetzt.

Als weitere erfindungsgemäße Zusätze können die hoch sodahaltigen Partikel auch Antiredepositionsmittel, sogenannte Soil Repellents, enthalten. Dies sind Polymere, die auf Fasern oder harte Oberflächen aufziehen und dort einer Wiederanschmutzung entgegenwirken. Dieser Effekt wird besonders deutlich, wenn ein Textil verschmutzt wird, das bereits vorher mehrfach mit einem erfindungsgemäßen Waschmittel, das diese öl- und fettlösende Komponente enthält, gewaschen wurde. Zu den bevorzugten öl- und fettlösenden Komponenten zählen beispielsweise nichtionische Celluloseether wie Methylcellulose und Methylhydroxypropylcellulose mit einem Anteil an Methoxy-Gruppen von 15 bis 30 Gew.-% und an Hydroxypropoxyl-Gruppen von 1 bis 15 Gew.-%, jeweils bezogen auf den nichtionischen Celluloseether, sowie die aus dem Stand der Technik bekannten Polymere der Phthalsäure und/oder der Terephthalsäure beziehungsweise von deren Derivaten, insbesondere Polymere aus Ethylenterephthalaten und/oder Polyethylenglykolterephthalaten oder anionisch und/oder nichtionisch modifizierten Derivaten von diesen.

Besonders bevorzugt von diesen sind die sulfonierten Derivate der Phthalsäure- und der Terephthalsäure-Polymere.

Weitere, in den erfindungsgemäßen, hoch sodahaltigen Partikeln in Frage kommende Polymere sind Farbübertragungsinhibitoren. Dazu gehören insbesondere Polyvinylpyrrolidone, Polyvinylimidazole, polymere N-Oxide wie Poly-(vinylpyridin-N-oxid) und Copolymere von Vinylpyrrolidon mit Vinylimidazol.

Darüber hinaus können die hoch sodahaltigen Partikel auch Duftstoffe und Duftstoffzubereitungen (Parfüms) enthalten. Als Parfümöle oder Duftstoffe können einzelne Riechstoff-Verbindungen verwendet werden, beispielsweise die synthetischen Produkte vom Typ der Ester, Ether, Aldehyde, Ketone, Alkohole und Kohlenwasserstoffe. Riechstoff-Verbindungen vom Typ der Ester sind beispielsweise Benzylacetat, Phenoxyethylisobutyrat, p-t-Butylcyclohexylacetat, Linalylacetat, Dimethylbenz-yl-carbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether. Zu den Aldehyden zählen z.B. lineare Alkanale mit 8 bis 18 C-Atomen, Citral, Citronellal, Citronellyloxyacetaldehyd, Cyclamenaldehyd, Hydroxycitronellal, Lileal und Bourgeonal.

Zu den Ketonen zählen die Ionone, $\alpha$-Isomethylionon, und Methylcedrylketon. Zu den Alkoholen zählen Anethol, Citronellol, Eugenol, Geraniol, Linalool, Phenylethylalkohol und Terpineol. Zu den Kohlenwasserstoffen zählen hauptsächlich Terpene wie Limonen und Pinen. Bevorzugt werden Mischungen verschiedener Riechstoffe verwendet, die so aufeinander abgestimmt sind, daß sie gemeinsam eine ansprechende Duftnote erzeugen. Solche Parfümöle können auch natürliche Riechstoff-Gemische enthalten, wie sie aus pflanzlichen Quellen zugänglich sind. Beispiele sind Pine-, Citrus-, Jasmin-, Patchouli-, Rosen- oder Ylang-Ylang-Öl. Ebenfalls geeignet sind Muskatöl, Salbeiöl, Kamillenöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl.

Es kann vorteilhaft sein, die Duftstoffe auf Träger aufzubringen, die die Haftung des Parfüms auf der Wäsche verstärken und durch eine langsamere Duftfreisetzung für langanhaltenden Duft der Textilien sorgen. Als solche Trägermaterialien haben sich beispielsweise Cyclodextrine bewährt. Dabei können die Cyclodextrin-Parfüm-Komplexe zusätzlich noch mit weiteren Hilfsstoffen beschichtet werden.

Die erfindungsgemäßen hoch sodahaltigen Partikel können zum Schutze des Spülgutes oder der Maschine Korrosionsinhibitoren enthalten, wobei Silberschutzmittel im Bereich des maschinellen Geschirrspülens eine besondere Bedeutung haben Allgemein können vor allem Silberschutzmittel ausgewählt aus der Gruppe der Triazole, der Benzotriazole, der Bisbenzotriazole, der Aminotriazole, der Alkylaminotriazole und der Übergangsmetallsalze oder -komplexe eingesetzt werden. Besonders bevorzugt zu verwenden sind Benzotriazol und/oder Alkylaminotriazol. Man findet in Reinigerformulierungen darüber hinaus häufig aktivchlorhaltige Mittel, die das Korrodieren der Silberoberfläche deutlich vermindern können. In chlorfreien Reinigern werden besonders sauerstoff- und stickstoffhaltige organische redoxaktive Verbindungen, wie zwei- und dreiwertige Phenole, zum Beispiel Hydrochinon, Brenzkatechin, Hydroxyhydrochinon, Gallussäure, Phloroglucin, Pyrogallol beziehungsweise Derivate dieser Verbindungsklassen. Auch salz- und komplexartige anorganische Verbindungen, wie Salze der Metalle Mn, Ti, Zr, Hf, V, Co und Ce finden häufig Verwendung. Bevorzugt sind hierbei die Übergangsmetallsalze, die ausgewählt sind aus der Gruppe der Mangan und/oder Cobaltsalze und/oder -komplexe, besonders bevorzugt der Cobalt(ammin)-Komplexe, der Cobalt(acetat)-Komplexe, der Cobalt(carbonyl)-Komplexe, der Chloride des Cobalts oder Mangans und des Mangansulfats. Ebenfalls können Zinkverbindungen zur Verhinderung der Korrosion am Spülgut eingesetzt werden.

## Beispiele

### Beispiel 1:

Durch Granulation in einem 50-Liter Pflugscharmischer der Firma Lödige wurden ein erfindungsgemäßes (E) und ein nicht erfindungsgemäßes (V) hoch sodahaltiges Granulat hergestellt. Bei E wurden ausgehend von V lediglich 2 Gew.-% der Roh-Soda gegen Natriumhydrogencarbonat ausgetauscht. Im Anschluß an die Granulation wurden die Granulate in einer Wirbelschichtapparatur der Firma Glatt bei einer Zulufttemperatur von 60°C über einen Zeitraum von 30 Minuten getrocknet. Nach der Trocknung wurden Feinanteile < 0,4 mm und Grobkomanteile > 1,6 mm abgesiebt und die Kornstabilität der verbleibenden Partikel getestet (siehe Tabelle 1). Als Maß für die Kornstabilität dient die Schüttgutfestigkeit (SGF), die mit Hilfe eines Johanson Indicizers gemessen wird. Zu beachten ist, daß der ermittelte Wert für die Schüttgutfestigkeit (SGF) selbstverständlich von der Verfestigungsspannung abhängt, mit dem die Schüttgutprobe im Johanson Indicizer für den eigentlichen Meßvorgang verfestigt und verdichtet wird. In diesem Beispiel wurden die Schüttgutproben bei einer Verfestigungsspannung von 45000 Pa verfestigt und verdichtet.
Sowohl die Funktionsweise dieses Meßgerätes, als auch die Meßmethodik ist in der entsprechenden Firmenschrift der Firma Messtechnik Schwartz GmbH in aller Ausführlichkeit beschrieben und braucht an dieser Stelle nicht weiter erläutert zu werden.
Bei der eingesetzten Roh-Soda und dem verwendetem Natriumhydrogencarbonat handelt es sich um Handelsprodukte der Firma Solvay, die unmittelbar nach Anlieferung, also frisch und unverwittert, verarbeitet wurden.
Als Paraffin wurde hydriertes Paraffin DEP 5665 B® der Firma DEA Mineralöl AG eingesetzt. Es handelt sich dabei um ein Gemisch aus höheren normal- und isoparaffinischen Kohlenwasserstoffen.
Als Tensid wurde eine Mischung aus 40,3 Gew.-% $C_{10-13}$-Alkylbenzolsulfonat (Maranil Paste A 75® , Handelsprodukt der Firma Henkel) und 59,7 Gew.% $C_{12-14}$-Alkohol mit 3 EO (Dehydol LS 3® , Handelsprodukt der Firma Cognis) eingesetzt.
Die Mengenangaben sind in Gew.-%, die Angabe der Schüttgutfestigkeit (SGF) ist in Pa.

Tabelle 1:

| | Soda | NHC* | Paraffin | Tensid | Wasser | SGF |
|---|---|---|---|---|---|---|
| E | 70 | 2 | 15 | 3 | 10 | 4400 |
| V | 72 | 0 | 15 | 3 | 10 | 11600 |

* NHC = Natriumhydrogencarbonat

Tabelle 1 zeigt, daß das Granulat mit der erfindungsgemäßen Rezeptur (E) eine deutlich niedrigere Schüttgutfestigkeitfestigkeit (SGF) aufweist als das Granulat mit der nicht erfindungsgemäßen Rezeptur (V). Da sich Schüttgutfestigkeit (SGF) und Kornstabilität umgekehrt proportional verhalten, bedeutet das, daß V eine sehr viel geringere Komstabilität besaß als E.

### Beispiel 2:

Es wurden zwei nicht erfindungsgemäße hoch sodahaltige Granulate (V1 und V2) und zwei erfindungsgemäße hoch sodahaltige Granulate (E1 und E2) analog zu Beispiel 1 hergestellt. Dabei wurde eine Komponente gemäß Tabelle 2 variiert (variable Komponente, VK). Die getesteten Zusammensetzungen der hoch sodahaltigen Granulate ergeben sich, wenn man VK aus Tabelle 2 in Tabelle 3 einsetzt.
Das eingesetzte Sokalan CP 5® (Maleinsäure-Acrylsäure-Copolymer-Natrium-Salz) ist ein Handelsprodukt der Firma BASF.

Tabelle 2:

| | VK* |
|---|---|
| E1 | Natriumhydrogencarbonat |
| E2 | Sokalan CP 5® |
| V1 | - |
| V2 | - |

* variable Komponente

Alle 4 Granulate wurden einem Abriebtest unterzogen. Dieser wurde wie folgt durchgeführt. 100 g Probe (E1, E2, V1, V2) werden auf ein Sieb gebracht (1,0 mm) und 2 Minuten gesiebt. Danach wird die Fraktion, die durch das Sieb ging ausgewogen (Auswaage b).

Anschließend werden beide Fraktionen zusammen mit 5 Kugeln (VA-Stahl, Durchmesser 30 mm, Masse 110 g/Kugel) quantitativ in einen Zylinder (VA-Stahl, Durchmesser 165 mm, Tiefe 115 mm) überführt. Der Zylinder wird verschlossen und in waagerechter Lage für 5 Minuten bei 50 U/min rotiert. Danach wird der Zylinder geöffnet, der Inhalt auf ein Sieb gebracht (1,0 mm), die Kugeln entfernt, 2 Minuten gesiebt und der Anteil, der durch das Sieb ging, ausgewogen (Auswaage a). Der Abrieb berechnet sich dann nach folgender Formel:

$$\% \text{ Abrieb} = a - b$$

a = Auswaage der Fraktion durch Sieb 1,0 mm nach Belastung (in g)
a = Auswaage der Fraktion durch Sieb 1,0 mm vor Belastung (in g)

Die Ergebnisse des Abriebtests zeigt Tabelle 3. Die Mengenangaben sind in Gew.-%, die Angabe des Abriebs ist in %.

Tabelle 3:

| | Soda | VK* | Paraffin | Tensid | Wasser | Abrieb |
|---|---|---|---|---|---|---|
| E1 | 70 | 2 | 15 | 3 | 10 | 3,7 |
| E2 | 69 | 3 | 15 | 3 | 10 | 6 |
| V1 | 72 | 0 | 15 | 3 | 10 | 21 |
| V2 | 75 | 0 | 20 | 5 | 0 | 45 |

* variable Komponente, siehe Tabelle 2

Der Abriebtest simuliert die mechanische Beanspruchung von Partikeln zum Beispiel beim Schütten in Silos oder beim Transport zum Verbraucher (Rütteln). Dabei gilt: Je geringer der Abrieb ist, desto höher ist die mechanische Stabilität der Partikel. Tabelle 3 zeigt, daß bei diesem Test die erfindungsgemäßen hoch sodahaltigen Granulate (E1 und E2) den geringsten Abrieb aufwiesen und damit die besten Resultate lieferten.

**Beispiel 3:**

Es wurden ein nicht erfindungsgemäßes hoch sodahaltiges Granulat (V) und zwei erfindungsgemäße hoch sodahaltige Granulate (E1 und E2) analog zu Beispiel 1 hergestellt, wobei abweichend von Beispiel 1 nach der Trocknung die Feinanteile < 0,4 mm und der Grobanteile > 1,6 mm nicht abgesiebt wurden. Die Zusammensetzungen dieser Granulate ergeben sich aus Tabelle 4:

Tabelle 4:

| | Soda | NHK* | S. CP5^2* | Paraffin | Siliconöl^3* | BSSED^4* | Tensid | Wasser |
|---|---|---|---|---|---|---|---|---|
| E1 | 72,8 | 2,0 | 0,9 | 11,4 | 1,3 | 1,7 | 2,3 | 7,6 |
| E2 | 69,2 | 5,0 | 0,9 | 12,1 | 1,3 | 1,8 | 2,5 | 7,2 |
| V | 74,8 | 0 | 0,9 | 11,4 | 1,3 | 1,7 | 2,3 | 7,6 |

* NHC = Natriumhydrogencarbonat
2* S. CP5 = Sokalan CP 5®
3* Siliconöl = Polydimethylsiloxan
4* BSSED = Bis-stearoyl-ethylendiamin

Von diesen 3 Granulaten wurde jeweils das Schüttgewicht und über Siebanalysen jeweils die Korngrößenverteilung bestimmt. Anschließend wurden analog zu Beispiel 2 Abriebtests durchgeführt. Die Ergebnisse sind in Tabelle 5 zusammengestellt.

Tabelle 5:

| | E1 | E2 | V |
|---|---|---|---|
| Schüttgewicht in g/l | 710 | 750 | 680 |
| | | | |
| Siebanalyse zur Bestimmung der Korngrößenverteilung: | | | |
| auf Sieb 1,6 mm in % | 29 | 26 | 15 |
| auf Sieb 0,8 mm in % | 36 | 45 | 37 |
| auf Sieb 0,4 mm in % | 33 | 29 | 40 |
| durch Sieb 0,4 mm in % | 2 | 0 | 8 |
| | | | |
| Abrieb in % | 14 | 8 | 24 |

Die Tabelle zeigt, daß die erfindungsgemäßen Granulate E1 und E2 höhere Schüttgewichte und geringere Anteile an feineren Teilchen (< 0,8 mm) besaßen, als das nicht erfindungsgemäße Granulat V. Ferner zeigt die Tabelle die größeren Kornstabilitäten der erfindungsgemäßen Granulate E1 und E2 im Vergleich zum nicht erfindungsgemäßen Granulat V, die sich in deren geringerem Abrieb äußern. Der geringere Anteil an feineren Teilchen (< 0,8 mm) der erfindungsgemäßen Granulate E1 und E2 kann als direkte Folge aus deren größerer Kornstabilität betrachtet werden: Größere Komstabilität bedeutet geringerer Abrieb und damit einen geringeren Anteil an feineren Teilchen.

**Patentansprüche**

1. Mechanisch stabile Partikel, überwiegend bestehend aus Soda und umfassend einen oder mehrere Stabilisatoren in Mengen von 0,1 bis 10 Gew.-%, bezogen auf das Gesamt-Partikelgewicht, und eine ausreichenden Menge Wasser als Agglomerationshilfsmittel.

2. Partikel nach Anspruch 1, **dadurch gekennzeichnet daß** sie zu mehr als 50 Gew-%, vorzugsweise zu mehr als 65 Gew.-%, weiter bevorzugt zu mehr als 70 Gew.-%, bezogen auf das Gesamt-Partikelgewicht, aus Soda bestehen.

3. Partikel nach Anspruch 1 oder 2, **dadurch gekennzeichnet daß** sie 1 bis 5 Gew.-%, bezogen auf das Gesamt-Partikelgewicht, eines oder mehrerer Stabilisatoren enthalten.

4. Partikel nach einem der Ansprüche 1 bis 3, **dadurch gekennzeichnet daß** sie als Stabilisator Alkalimetallhydrogencarbonat und/oder Alkalimetallsesquicarbonat und/oder Alkalimetallaluminosilicat enthalten.

5. Partikel nach Anspruch 4, **dadurch gekennzeichnet daß** sie als Stabilisatoren Natriumhydrogencarbonat und/oder Natriumsesquicarbonat und/oder Zeolith A, bevorzugt Natriumhydrogencarbonat enthalten.

6. Partikel nach einem der Ansprüche 1 bis 5, **dadurch gekennzeichnet daß** Wasser in einer Menge von bis zu 10 Gew.-%, bezogen auf das Gesamt-Partikelgewicht, bevorzugt 1 bis 10 Gew.-%, enthalten ist.

7. Partikel nach einem der Ansprüche 1 bis 6, **dadurch gekennzeichnet daß** die Schüttgutfestigkeit, als reziprokes Maß für die mechanische Stabilität, ermittelt mit Hilfe eines Johanson Indicizers, bei einer Verfestigungsspannung von 45000 Pa höchstens 8000 Pa, bevorzugt höchstens 5000 Pa, beträgt.

8. Partikel nach einem der Ansprüche 1 bis 7, **dadurch gekennzeichnet daß** sie einen oder mehrere Inhaltsstoffe von Wasch- oder Reinigungsmitteln, vorzugsweise in Mengen von 2 bis 40 Gew.-%, insbesondere in Mengen von 10 bis 30 Gew.-%, bezogen auf das Gesamt-Partikelgewicht, enthalten.

9. Verfahren zur Herstellung mechanisch stabiler, überwiegend aus Soda bestehender und einen oder mehrere Stabilisatoren in Mengen von 0,1 bis 10 Gew.-%, bezogen auf das Gesamt-Partikelgewicht, und einer ausreichenden

Menge Wasser als Agglomerationshilfsmittel, umfassender Partikel, **dadurch gekennzeichnet, daß** man Roh-Soda und eine ausreichende Menge Wasser als Agglomerationshilfsmittel mit einem oder mehreren Stabilisatoren innig vermischt und das entstandene Gemisch auf an sich bekannte Weise zu Partikeln formt.

**10.** Verfahren nach Anspruch 9, **dadurch gekennzeichnet, daß** man als Stabilisator Alkalimetallhydrogencarbonat und/oder Alkalimetallsesquicarbonat und/oder Alkalimetallaluminosilicat einsetzt, bevorzugt Natriumhydrogencarbonat und/oder Natriumsesquicarbonat und/oder Zeolith A, besonders bevorzugt Natriumhydrogencarbonat.

**11.** Verfahren nach einem der Ansprüche 9 oder 10, **dadurch gekennzeichnet, daß** man den Stabilisator in einer Menge von 0,1 bis 10 Gew.-%, bevorzugt in einer Menge von 1 bis 5 Gew.-%, bezogen auf das Gesamt-Partikelgewicht, einsetzt.

**12.** Verfahren nach einem der Ansprüche 9 bis 11, **dadurch gekennzeichnet, daß** es ein Granulationsverfahren ist.

**13.** Verfahren nach Anspruch 12, **dadurch gekennzeichnet, daß** im Granulationsverfahren Zusätze eines oder mehrerer Inhaltsstoffe, wie sie in Wasch- oder Reinigungsmitteln üblich sind, vorzugsweise in Mengen von 2 bis 40 Gew.-%, insbesondere in Mengen von 10 bis 30 Gew.-%, bezogen auf das Gesamt-Partikelgewicht, eingesetzt werden.

**14.** Verwendung mechanisch stabiler, überwiegend aus Soda bestehender Partikel, **dadurch gekennzeichnet, daß** die Partikel nach einem der Ansprüche 1 bis 8 in Wasch-, Spül- oder Reinigungsmitteln enthalten sind.

**15.** Wasch-, Spül- oder Reinigungsmittel mit an sich bekannten wasch-, spül- oder reinigungsaktiven Komponenten in den an sich bekannten Mengen und gegebenenfalls mit den üblichen Trägern und Hilfsstoffen, **gekennzeichnet durch** einen Gehalt an mechanisch stabilen, überwiegend aus Soda bestehenden Partikeln nach einem der Ansprüche 1 bis 8, in einer Menge von bis zu 50 Gew.-%, bevorzugt bis zu 25 Gew.-% und besonders bevorzugt bis zu 15 Gew.-%, bezogen auf das Gesamt-Gewicht des Mittels.